Europäisches Patentamt

European Patent Office

Office européen des brevets

(19)

(11) Numéro de publication: **0 1 1 7 793**
**B1**

(12) **FASCICULE DE BREVET EUROPEEN**

(45) Date de publication du fascicule du brevet:
02.10.85

(21) Numéro de dépôt: 84400232.9

(22) Date de dépôt: 03.02.84

(51) Int. Cl.⁴: **F 25 B 9/00,** F 25 J 3/06,
B 01 D 1/28

(54) Procédé et installation de refroidissement d'un fluide, notamment de liquéfaction de gaz naturel.

(30) Priorité: 08.02.83 FR 8301919

(43) Date de publication de la demande:
05.09.84 Bulletin 84/36

(45) Mention de la délivrance du brevet:
02.10.85 Bulletin 85/40

(84) Etats contractants désignés:
AT BE CH DE FR GB IT LI LU NL SE

(56) Documents cités:
EP - A - 0 082 042
DE - B - 1 643 685
FR - A - 2 217 648

CHEMICAL ENGINEERING PROGRESS, vol. 76, no. 11,
novembre 1980, pages 70-77, New York, USA L.D.
WEIMER et al.: "A systems engineering approach to
vapor recompression evaporators"

(73) Titulaire: **L'AIR LIQUIDE, SOCIETE ANONYME POUR
L'ETUDE ET L'EXPLOITATION DES PROCEDES
GEORGES CLAUDE, 75, Quai d'Orsay, F-75321 Paris
Cedex 07 (FR)**

(72) Inventeur: **Gauthier, Pierre, 95, avenue Jean Jaurès,
F-94260 Fresnes (FR)**

(74) Mandataire: **Jacobson, Claude et al, L'AIR LIQUIDE,
SOCIETE ANONYME POUR L'ETUDE ET
L'EXPLOITATION DES PROCEDES GEORGES
CLAUDE 75, quai d'Orsay, F-75321 Paris Cedex 07 (FR)**

## Description

La présente invention est relative à un procédé et à une installation de refroidissement d'un fluide qui s'appliquent notamment à la liquéfaction du gaz naturel. Elle concerne en premier lieu un procédé de refroidissement du type dans lequel on comprime en au moins deux stades un mélange frigorigène composé de constituants de volatilités différentes et dans lequel, après le dernier stade et après au moins un stade intermédiaire de compression, on condense partiellement le mélange, on détend les fractions condensées et on les vaporise en échange de chaleur avec le fluide à refroidir avant de les comprimer de nouveau.

Dans les procédés de ce type, la condensation d'une fraction peuvolatile effectuée après ledit stade intermédiaire a pour but de fournir un supplément de frigories dans la partie chaude de la ligne d'échange thermique au prix d'une énergie spécifique faible du fait du taux de compression réduit de cette fraction. Cette fraction peu volatile permet de réduire dans cette région l'écart de température entre le mélange frigorigène et le ou les fluides à refroidir, écart qui correspond à une irréversibilité thermodynamique.

Cependant, le gain résultant ne devient sensible que si le mélange ainsi condensé en moyenne pression possède une température de bulle suffisamment élevée et/ou si son débit est suffisamment important. En particulier, dans le cas de la liquéfaction du gaz naturel, où le mélange frigorigène est généralement constitué par un mélange d'hydrocarbures de $C_1$ à $C_5$, avec éventuellement une faible proportion d'azote, afin de pouvoir produire des frigories à des niveaux de température optimaux, il est nécessaire d'alourdir le mélange pour obtenir une économie d'énergie notable.

Il a été proposé dans ce but (FR-A-2 022 550) d'introduire dans le mélange frigoriène des hydrocarbures très lourds, par exemple de l'hexane. Cependant, une partie de ces hydrocarbures très lourds se retrouve dans la vapeur haute pression, qui est refroidie et liquéfiée pour fournir, après détente, les frigories nécessaires dans la partie froide de la ligne d'échange. Comme l'hexane se solidifie à −94°C et n'est que faiblement soluble dans le méthane aux basses températures, il est nécessaire, pour éviter le bouchage de la ligne d'échange thermique, de prévoir sur celle-ci un certain nombre de coupures permettant d'éliminer l'hexane par condensation étagée avant d'atteindre sa limite de solubilité. Ceci conduit à une ligne d'échange complexe comportant de nombreux échangeurs de chaleur en série.

L'invention a pour but de réduire l'énergie de compression sans faire appel à des constituants risquant de se solidifier dans la partie froide de la ligne d'échange.

A cet effet, l'invention a pour objet un procédé de refroidissement du type précité, caractérisé en ce que l'on effectue l'une au moins des opérations de condensation en envoyant dans une colonne de distillation le mélange sortant de l'étage correspondant du compresseur.

Dans un premier mode de mise en œuvre, on effectue la distillation uniquement après le dernier stade de compression, et le condensat résultant de cette distillation et le ou les autres condensats sont sous-refroidis à une même température et, après détente, réunis dans une même conduite avant d'être mis en relation d'échange thermique avec le fluide à refroidir.

Dans un second mode de mise en œuvre, on effectue une distillation à un stade intermédiaire de compression, et on sous-refroidit le condensat résultant de la distillation jusqu'à une première température et le condensat du ou des stades suivants de compression à une seconde température inférieure à la première.

L'invention a également pour objet une installation destinée à la mise en œuvre d'un tel procédé. Cette installation, du type comprenant un circuit frigorifique dans lequel circule un mélange frigorigène et qui comporte un compresseur à au moins deux étages pourvus chacun d'un réfrigérant et, après le réfrigérant du dernier étage et après celui d'au moins un étage intermédiaire, un séparateur liquide-vapeur, est caractérisée en ce qu'entre le réfrigérant associé à l'un au moins des séparateurs et l'étage de compresseur correspondant est montée une colonne de distillation qui est chauffée par le gaz comprimé par cet étage de compresseur et qui reçoit en reflux de liquide issu du séparateur.

Plusieurs modes de réalisations de l'invention vont maintenant être décrits à titre d'exemple, en regard des dessin annexés sur lesquels:

la figure 1 est un schéma d'une installation de liquéfaction de gaz naturel conforme à l'invention,

la figure 2 est un diagramme illustrant l'avantage apporté par une telle installation, et

les figures 3 et 4 sont des schémas partiels de deux autres modes de réalisation de l'installation suivant l'invention.

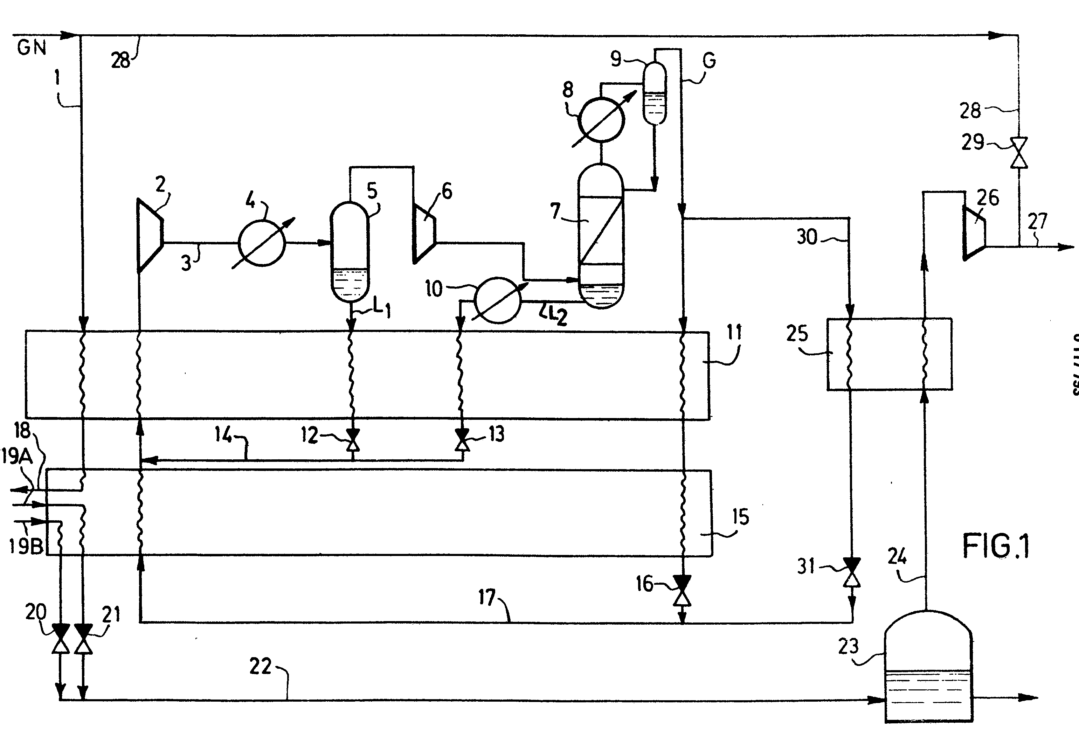

L'installation représentée à la figure 1 est destinée à refroidir, liquéfier et sous-refroidir du gaz naturel circulant dans une conduite 1 à la température ambiante sous une pression de l'ordre de 40 ou 50 bars. Cette installation utilise pour cela un cycle frigorifique du type dit à cascade incorporée. Ce cycle est fermé en ce sens que le mélange frigorigène circule dans des conduites entièrement séparées de la conduite 1.

Le mélange frigorigène est un mélange d'hydrocarbures de $C_1$ à $C_5$, par exemple de méthane, d'éthane, de propane, de butane et de pentane, et d'azote. Il subit une compression en deux stades: il est aspiré en basse pression (de l'ordre de 3 bars) par un premier étage de compresseur 2 qui le refoule en moyenne pression (de l'ordre de 12 bars) dans une conduite 3. Le mélange traverse un réfrigérant intermédiaire 4 alimenté en eau de mer, où il se condense partiellement. Les deux phases sont séparées dans un séparateur 5, et la vapeur résultante est comprimée en haute pression (de l'ordre de 50 bars) par un deuxième étage de compressur 6.

Le gaz sortant de ce dernier à environ 140°C est envoyé directement dans la cuve d'une colonne de distillation 7, comportant un très petit nombre de plateaux théoriques, par exemple deux plateaux théoriques. La vapeur de tête est refroidie et partiellement condensée dans un réfrigérant 8, également à eau de mer, et le condensat, recueilli dans un séparateur 9, est renvoyé en reflux dans la colonne 7.

Ainsi, trois fluides sont disponibles pour fournir les frigories nécessaires pour refroidir et liquéfier le gaz naturel: un premier liquide L1, en moyenne pression, qui est le liquide recueilli dans le séparateur 5; un second liquide L2, en haute pression, qui est le liquide de cuve de la colonne 7 et le gaz G sortant du séparateur final 9. Le liquide L1 et le gaz G se trouvent sensiblement à la même température, de l'ordre de 40°C, imposée par l'utilisation de l'eau de mer dans les réfrigérants 4 et 8. Le liquide L2 est ramené sensiblement à la même température par passage dans un réfrigérant è eau de mer 10.

Les trois fluides L1, L2 et G traversent à cocourant avec le gaz naturel un premier échangeur de chaleur 11 qui constitue la partie »chaude« de la ligne d'échange. Au bout froid de l'échangeur 11, soit à une température de l'ordre de − 40 à − 60°C correspondant à un sous-refroidissement suffisant des liquides L1 et L2, ces deux liquides sont détendus en basse pression dans des dé tendeurs respectifs 12 et 13, puis réunis dans une conduite 14 et vaporisés à contre-courant du gaz naturel dans l'échangeur 11, la vapeur étant surchauffée dans la partie chaude de cet échangeur puis ramenée à l'aspiration de l'étage de compressur 2, à peu près à la température ambiante.

Le gaz G, après avoir traversé l'échangeur 11, où il se condense partiellement, traverse un deuxième échangeur de chaleur 15, où il se liquéfie totalement et se sous-refroidit; au bout froid de l'échangeur 15, soit à la température finale désirée pour le gaz naturel liquéfié en haute pression (−150 à −161°C), ce liquide, suffisamment sous-refroidi, est détendu en basse pression dans un détendeur 16 et envoyé par une conduite 17 se vaporiser dans l'échangeur 15 à contre-courant du gaz naturel. La vapeur est ensuite réunie aux liquides L1 et L2 circulant dans la conduite 14, de sorte que l'ensemble de ces trois fluides forme un fluide diphasique qui se vaporise en fournissant les frigories nécessaires dans l'échangeur 11.

L'installation peut, comme représenté, être complétée par les dispositions suivantes.

A un certain niveau de l'échangeur froid 15, référence 18, le gaz naturel est sorti de cet échangeur et envoyé à une unité de dégazolinage (non représentée), où certains produits lourds sont extraits. Les produits restant, par exemple sous deux pressions différentes, sont réintroduits en 19A et 19B dans l'échangeur 15 pour achever leur refroidissement, leur liquéfaction et leur sous-refroidissement.

A leur sortie de l'échangeur 15, les deux fractions sous-refroidies du gaz naturel sont détendues en une ou plusieurs étapes jusqu'à une pression voisine de la pression atmosphérique, dans des détendeurs respectifs 20 et 21, puis réunis dans une conduite 22 pour être envoyées dans un réservoir de stockage 23. La vapeur qui se forme dans ce réservoir, dont la formation amène le gaz naturel liquéfié à sa température d'équilibre d'environ −161°C, est évacuée par une conduite 24, traverse un échangeur de chaleur 25, où elle se réchauffe, et est recomprimée par un compresseur 26 pour être envoyée par une conduite 27 dans le réseau d'utilisation »fuel gas«. De plus, une conduite de dérivation 28 piquée sur la conduite 1 en amont de l'échangeur 11 et équipée d'un détendeur 29 permet si nécessaire de fournir un appoint de gaz naturel gazeux à la conduite 27.

Les frigories cédées par les évaporations du stockage dans l'échangeur 25 refroidissent à contre-courant une partie du gaz G. A cet effet, une conduite 30 est piquée sur la conduite de gaz G entre le séparateur 9 et l'échangeur 11 et traverse l'échangeur 25, dans lequel le gaz G se liquéfie et se sous-refroidit. Ce liquide est détendu en basse pression dans un détendeur 31, puis se mélange au fluide basse pression qui sort du détendeur 16.

Bien entendu, en variante, les frigories des évaporations du stockage peuvent servir à refroidir et liquéfier une fraction du gaz naturel de départ.

On comparera maintenant cette installation de la figure 1 avec une installation analogue mais dans laquelle le gaz sortant du deuxième étage de compresseur 6 passerait directement dans le réfrigérant 8, selon la technique antérieure.

Dans ce dernier cas, un mélange ayant une composition et un débit donnés conduit à une vapeur haute pression de composition et de débit déterminés, et le liquide haute pression envoyé dans l'échangeur chaud 11 est le liquide en équilibre avec cette vapeur. Lorsqu'on interpose la colonne de distillation 7, on obtient en haute pression une vapeur G nettement plus légère et un liquide L2 nettement plus lourd.

En pratique, on se donne le débit et la composition de la vapeur haute pression pour assurer le bilan frigorifique dans l'échangeur 15. Le raisonnement ci-dessus montre que l'invention permet d'obtenir la même composition de vapeur haute pression avec un mélange plus lourd que dans la technique antérieure. Ce mélange plus lourd produira un plus fort débit de liquide L1 dans le séparateur 5, à pression et température données. Mais par ailleurs, le débit de la vapeur G étant donné, la somme des débits des liquides L1 et L2 est donnée également, en première approximation, pour assurer le bilan frigorifique dans l'échangeur 11.

Il résulte de tout ceci que l'introduction de la colonne 7 augmente le débit du liquide moyenne pression et diminue celui du liquide haute pression. Il y a donc moins de vapeur à comprimer dans le deuxième étage 6, ce qui représente un gain d'énergie spécifique de liquéfaction.

De plus, le fluide L1+L2 est alourdi; comme il s'agit d'un mélange d'hydrocarbures, sa chaleur de vaporisation est augmentée. Par suite, un débit global réduit suffit pour assurer le bilan frigorifique dans l'échangeur 11, ce qui va également dans le sens d'une réduction de l'énergie de compression.

On voit que le circuit haute pression ne nécessite aucune coupure puisque le fluide G qui y circle ne contient pas de composants susceptibles de s'y solidifier. En pratique, on pourra tolérer de tels composants à titre d'impuretés dans le mélange de cycle, dans une porportion suffisamment faible pour ne pas dépasser leur limite de solubilité dans les autres constituants du mélange dans la gamme de températures utilisée. En outre, les seules interruptions nécessaires des circuits moyenne pression et basse pression consistent à sortir les liquides L1 et L2 en moyenne pression et à les réinjecter simultanément en basse pression. Par conséquent, bien que l'on ait représenté la ligne d'échange comme comportant deux échangeurs distincts 11 et 15, il est tout à fait possible de prévoir un échangeur de chaleur unique couvrant toute la gamme des températures de traitement du gaz naturel.

Sur le plan thermodynamique, le gain d'énergie obtenu s'explique de deux façons:

a)  au niveau du réfrigérant final: en l'absence de la colonne 7, le réfrigérant final du compresseur à deux étages réalise un échange de chaleur entre une source chaude (l'eau de mer) à une température de l'ordre de 30°C et un fluide réfrigérant qui sort du deuxième étage de compression à une température de l'ordre de 140°C et qui commence à se condenser dès 120°C environ. Un transfert de chaleur considérable a donc lieu dans des conditions fortement irréversibles. Au contraire, avec la colonne 7, la température élevée du fluide comprimé est mise à profit pour une destillation, et la vapeur de tête qui parvient au réfrigérant 8 se trouve à une température nettement réduite. Les conditions d'échange de chaleur dans ce réfrigérant sont donc beaucoup plus proches de la réversibilité. Certes, l'écart de température précité se retrouve au niveau du réfrigérant 10, qui constitue avec le réfrigérant 8 le réfrigérant final du compresseur, mais il s'agit là d'un refroidissement sans chagement de phase, qui met en jeu des quantités de chaleur très inférieures;

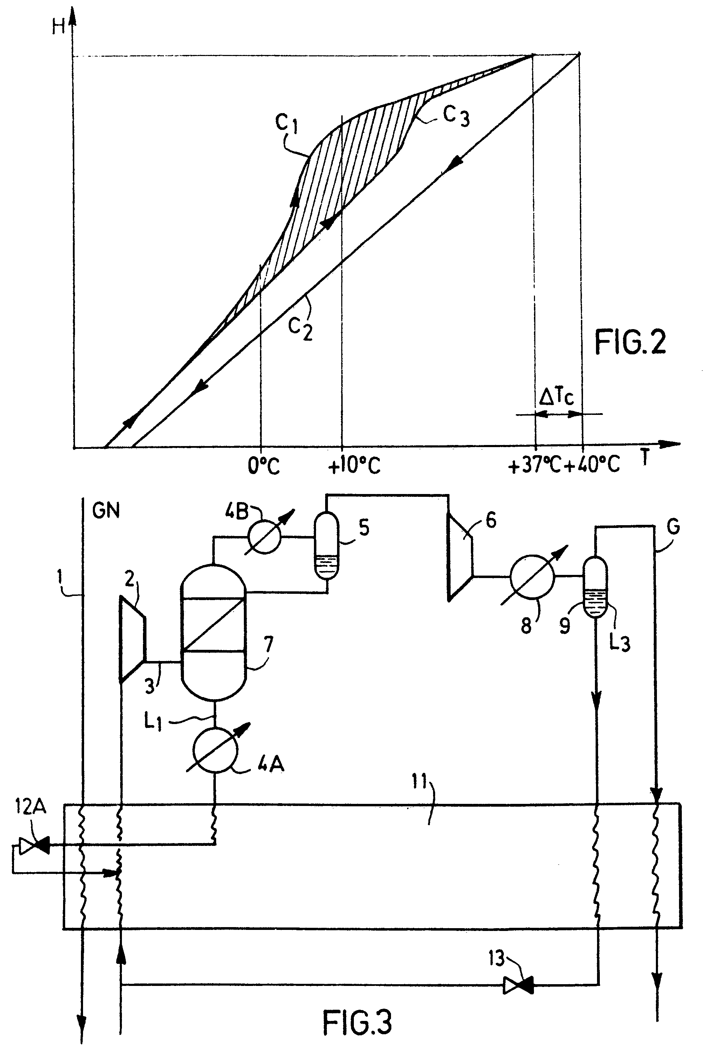

b)  au niveau de l'échangeur chaud 11: on considérera le diagramme d'échange de la partie chaude de la ligne d'échange, représenté à la figure 2, sur laquelle on a porté en abscisses les températures et en ordonnées les enthalpies (pour la clarté du dessin, les écarts de températures ont été exagérés sur cette figure): en l'absence de la colonne 7, le fluide L1×L2 détendu, trop léger, se vaporise trop rapidement dans la partie intermédiaire de l'échangeur 11, par exemple entre 0°C et +10°C. Par suite, l'écart de température entre d'une part le mélange frigorigène en cours de réchauffage (courbe C1), et d'autre part le gaz naturel et le mélange frigorène en cours de refroidissement (courbe C2) augmente beaucoup dans cette zone, ce qui correspond à une forte irréversibilité thermodynamique. Par contre, avec le mélange alourdi obtenu conformément à l'invention, la vaporisation dans l'échangeur 11 est plus progressive, et le mélange est représenté par la courbe C3, nettement plus proche de la courbe C2. Sur la figure 2, $\Delta T_c$ représente l'écart au bout chaud de l'échangeur 11, que l'on se fixe au départ.

Il est à noter qu'un gain d'énergie substantiel, de l'ordre de 10%, peut être obtenu avec une colonne 7 comportant un très petit nombre de plateaux, par exemple deux plateaux théoriques. L'investissement correspondant est donc très limité.

L'installation de la figure 3, dont seules les parties pertinentes ont été représentées, diffère de celle de la figure 1 par le fait que la colonne de distillation 7 est montée après le premier étage de compresseur 2 alors que le gaz sortant du deuxième étage de compresseur 6 passe directement dans le réfrigérant final 8 puis dans le séparateur 9, dont le liquide L3 est envoyé dans l'échangeur 11. Plus précisément, le mélange comprimé dans le premier étage 2 est directement envoyé par la conduite 3 dans la cuve de la colonne 7; le liquide de cuve (liquide L1) passe dans un réfrigérant 4A; la vapeur de tête passe dans un réfrigérant 4B, puis dans le séparateur 5, le liquide recueilli dans celui-ci retournant en reflux dans la colonne 7 tandis que la vapeur est aspirée par le deuxième étage de compresseur 6.

On peut de nouveau comparer cette installation à une installation de la technique antérieure dépourvue de colonne de distillation, c'est-à-dire dans laquelle la conduite 3 aboutit directement au réfrigérant 4B et où le liquide recueilli dans le séparateur 5 est directement envoyé dans l'échangeur 11: pour un débit et une composition donnés du gaz haute pression G, le liquide L3 contenu dans le séparateur 9 a une composition donnée. La pression intermédiaire entre les deux étages de compression définit le débit du liquide L3 permettant d'obtenir un mélange dont le point de rosée est la température du séparateur 5. Le débit et la composition de la vapeur sortant du séparateur 5 sont donc inchangés. En l'absence de la colonne 7, le liquide L1 est en éuilibre avec ladite vapeur; avec la colonne 7, le liquide L1, étant plus lourd, possède une chaleur de vaporisation accrue, de sorte qu'un débit réduit suffit pour assurer le bilan frigorifique de l'échangeur 11.

Le liquide L1 étant très lourd, il est souhaitable de le sous-refroidir jusqu'à un pouint intermédiaire de l'échangeur 11, comme représenté à la figure 3, avant de le détendre en basse pression dans un détendeur 12A puis de le réinjecter dans l'échangeur 11 à la même température, par exemple de −10°C, en vue de sa vaporisation, en mélange avec les deux fluides haute pression L3 et G déjà détendus. En procédant ainsi, le liquide L1 ne gêne pas la vaporisation du liquide L3 plus léger.

Ainsi, le débit comprimé par le premier étage 2, est réduit, et les frigories fournis par le liquide L1 le sont à un niveau de température plus élevé, précisément dans la zone d'écart excessif de température visible sur la figure 2. Sur le plan thermodynamique, l'introduction de la colonne 7 a réduit l'irréversibilité d'une part au niveau de la source chaude 4B pour la même raison que dans le cas de la figure 1, et d'autre part par la réduction de l'écart de température dans la partie chaude de la ligne d'échange.

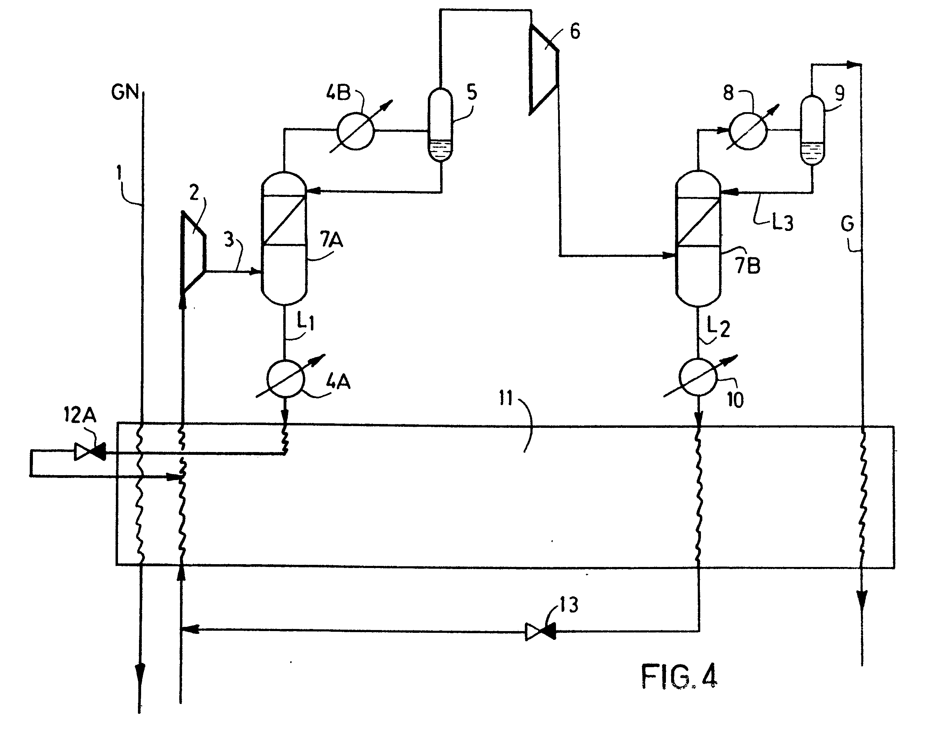

Comme on l'a représente à la figure 4, il est possible de combiner les solutions des figures 1 et 3 en utilisant une colonne de distillation à chaque étage de compression. Ainsi, la conduite 3 de refoulement du premier étage 2 débouche directement dans la cuve d'une première colonne de distillation 7A. Le liquide de cuve L1 passe dans un réfrigérant à eau de mer 4A est sous-refroidi dans la partie chaude de l'échangeur 11. La vapeur de tête passe dans un réfrigérant à eau de mer 4B puis parvient à un séparateur 5. Le liquide recueilli dans ce dernier est renvoyé en reflux dans la colonne 7A, tandis que la vapeur alimente le deuxième étage de compresseur 6. Le gaz sortant de ce dernier alimente directement la cuve d'une deuxième colonne de distillation 7B. Le liquide de cuve L2 passe dans un réfrigérant à eau de mer 10 et est sous-refroidi en traversant la totalité de l'échangeur 11. La vapeur de tête passe dans un réfrigérant à eau de mer 8 puis parvient à un séparateur 9. Le liquide L3 recueilli dans ce dernier est renvoyé en reflux dans la colonne 7B, tandis que la vapeur G constitue le fluide frigorifique haute pression.

Il est clair que l'installation de la figure 4 apporte l'ensemble des avantages de celles des figures 1 et 3. Par conséquent, au prix d'un investissement supplémentaire modéré, on obtient un gain notable d'énergie spécifique de liquéfaction par rapport aux installations de la technique antérieure.

Dans chacune des installations décrites ci-dessus, la ou chaque colonne de distillation 7, 7A, 7B est chauffée par injection directe dans la colonne du gaz comprimé issu de l'étalage de compresseur 2 ou 6 correspondant. En variante, ce gaz comprimé pourrait traverser un serpentin d'échange de chaleur disposé dans la cuve de la colonne et chauffant celle-ci, avant d'être injecté dans la colonne à une hauteur appropriée.

## Revendications

1. Procédé de refroidissement d'un fluide, du type dans lequel on comprime en au moins deux stades un mélange frigorigène composé de constituants de volatilités différentes et dans lequel, après le dernier stade et après au moins un stade intermédiaire de compression, on condense partiellement le mélange, on détend les fractions condensées et on les vaporise en échange de chaleur avec le fluide à refroidir avant de les comprimer de nouveau, caractérisé en ce que l'on effectue l'une au moins des opérations de condensation en envoyant dans une colonne de distillation le mélange sortant de l'étage correspondant du compresseur.

2. Procédé suivant la revendication 1, caractérisé en ce qu'on effectue la distillation uniquement après le dernier stade de compression, et en ce que le condensat résultant de cette distillation et le ou les autres condensats sont sous-refroidis à une même température et, après détente, réunis dans une même conduite avant d'être mis en relation d'échange thermique avec le fluide à refroidir.

3. Procédé suivant la revendication 1, caractérisé en ce qu'on effectue une distillation à un stade intermédiaire de compression, et en ce qu'on sous -refroidit le condensat résultant de la distillation jusqu'à une première température et le condensat du ou des stades suivants de compression à une seconde température inférieure à la première.

4. Procédé suivant la revendication 3, caractérisé en ce qu'on effectue également une distillation audit ou à l'un desdits stades suivants de compression.

5. Procédé suivant l'une quelconque des revendications 1 à 4, dans lequel on liquéfie le fluide à refroidir et on le stocke à l'état liquide, caractérisé en ce qu'on refroidit et on condense une partie du mélange haute pression en échange de chaleur avec la vapeur produite dans le réservoir de stockage.

6. Procédé suivant l'une quelconque des revendications 1 à 5, caractérisé en ce qu'on détend tous les condensats à la même pression.

7. Procédé suivant la revendication 6, caractérisé en ce que ladite pression est la basse pression.

8. Installation de refroidissement d'un fluide, du type comprenant un circuit frigorifique dans lequel circule un mélange frigorigène et qui comporte un compresseur à au moins deux étages (2, 6) pourvus chacun d'un réfrigérant (4, 8; 4B, 8) et, après le réfrigérant (8) du dernier étage (6) et après celui (4; 4B) d'au moins un étage intermédiaire (2), un séparateur liquidevapeur (5, 9), caractérisée en ce qu'entre le réfrigérant associé à l'un moins des séparateurs et l'étage de compresseur (2, 6) correspondant est montée une colonne de distillation (7; 7A, 7B) qui est chauffée par le gaz comprimé par cet étage de compresseur et qui reçoit en reflux le liquide issu du séparateur.

9. Installation suivant la revendication 8, caractérisée en ce qu'elle comporte une colonne de distillation unique (7) après le dernier étage de compresseur (6), et en ce qu'il est prévu des moyens (11) pour sous-refroidir à une même température tous les liquides issus de cette colonne et du ou des autres séparateurs (5).

10. Installation suivant la revendication 8, caractérisée en ce qu'une colonne de distillation (7; 7A) est prévue après un étage intermédiaire de compresseur (2), et en ce qu'il est prévu des moyens (11) pour sous-refroidir le liquide de cuve (L1) de cette colonne à une première température et le ou les liquides (L2; L3) issus du ou des étages de compresseur suivants (6) à une seconde température inférieure à cette première température.

11. Installation suivant la revendication 10, caractérisée en ce qu'elle comporte en outre une colonne de distillation (7B) après ledit ou au moins un desdits étages de compresseur suivants (6).

12. Installation suivant l'une quelconque des revendications 8 à 11, destinée à liquéfier le fluide à refroidir et à le stocker à l'état liquide, caractérisée en ce qu'elle comporte un échangeur de chaleur (25) traversé dans un sens par la vapeur produite dans le réservoir de stockage (23) et dans l'autre sens par un fraction du mélange haute pression (G).

13. Installation suivant l'une quelconque des revendications 8 à 12, caractérisée en ce qu'elle comprend des détendeurs (12, 13, 16; 12A, 13, 16) pour détendre tous les fluides comprimés jusqu'à une même pression.

14. Installation suivant la revendication 13, caractérisée en ce que ladite pression est la basse pression.

15. Installation suivant l'une quelconque des revendications 8 à 14, caractérisée en ce que la ou chaque colonne de distillation (7; 7A, 7B) comporte deux plateaux théoriques.

16. Installation suivant l'une quelconque des revendications 8 à 15, caractérisée en ce que la ou chaque colonne de distillation (7; 7A, 7B) est chauffée par injection directe dans cette colonne du gaz comprimé issu de l'étage de compresseur (2, 6) correspondant.

17. Installation suivant l'une quelconque des revendications 8 à 15, caractérisée en ce que la ou chaque colonne de distillation est chauffée par l'intermédiaire d'un échangeur de chaleur alimenté par le gaz comprimé issu de l'étage de compresseur correspondant.

**Patentansprüche**

1. Verfahren zur Kühlung eines Fluids, bei dem man in wenigstens zwei Stufen ein Kältegemisch, das aus Bestandteilen unterschiedlicher Flüchtigkeit besteht, komprimiert und bei dem man nach der letzten Stufe und nach wenigstens einer Zwischenstufe der Kompression das Gemisch teilweise kondensiert, die kondensierten Fraktionen entspannt und sie im Wärmeaustausch mit dem zu kühlenden Fluid verdampft, bevor man sie erneut komprimiert, dadurch gekennzeichnet, daß man wenigstens eine der Kondensationsoperationen in der Weise durchführt, daß man das aus der entsprechenden Kompressorstufe kommende Gemisch in eine Destillationskolonne überführt.

2. Verfahren nach Anspruch 1, dadurch gekennzeichnet, daß man die Destillation allein nach der letzten Kompressionsstufe durchführt und daß das resultierende Kondensat dieser Destillation und das oder die anderen Kondensate auf eine gleiche Temperatur unterkühlt und nach einer Entspannung in einer gleichen Leitung wiedervereinigt werden, bevor sie dem Wärmetausch mit dem zu kühlenden Fluid unterzogen werden.

3. Verfahren nach Anspruch 1, dadurch gekennzeichnet, daß man eine Destillation in einer Kompressionszwischenstufe durchführt und daß man das resultierende Kondensat der Destillation bis zu einer ersten Temperatur und das Kondensat der folgenden Kompressionsstufe oder Kompressionsstufen auf eine zweite Temperatur unterhalb der ersten Temperatur unterkühlt.

4. Verfahren nach Anspruch 3, dadurch gekennzeichnet, daß man in der oder in einer der folgenden Kompressionsstufen auch eine Destillation durchführt.

5. Verfahren nach einem der Ansprüche 1 bis 4, bei dem man das zu kühlende Fluid verflüssigt und es in flüssigem Zustand lagert, dadurch gekennzeichnet, daß man einen Teil des Gemisches mit hohem Druck im Wärmetausch mit dem in dem Lagerbehälter gebildeten Dampf kühlt und kondensiert.

6. Verfahren nach einem der Ansprüche 1 bis 5, dadurch gekennzeichnet, daß man alle Kondensate auf den gleichen Druck entspannt.

7. Verfahren nach Anspruch 6, dadurch gekennzeichnet, daß der genannte Druck der niedrige Druck ist.

8. Vorrichtung zur Kühlung eines Fluids mit einem Kältekreislauf, in welchem ein Kältegemisch zirkuliert und der einen Kompressor mit wenigstens zwei Stufen (2, 6), von denen jede mit einem Kühler (4, 8; 4B, 8) versehen ist, aufweist, und mit einer Flüssigkeits-Dampf-Trenneinrichtung (5, 9) nach dem Kühler (8) der ersten Stufe (6) und nach demjenigen (4; 4B) wenigstens einer Zwischenstufe (2), dadurch gekennzeichnet, daß zwischen dem mit wenigstens einem der Trenneinrichtungen verbundenen Kühler und der entsprechenden Kompressorstufe (2, 6) eine Destillationskolonne (7; 7A, 7B) angeordnet ist, die durch das durch diese Kompressorstufe komprimierte Gas erwärmt wird und die als Rückfluß die aus der Trenneinrichtung stammende Flüssigkeit aufnimmt.

9. Vorrichtung nach Anspruch 8, dadurch gekennzeichnet, daß sie eine einzige Destillationskolonne (7) nach der letzten Kompressorstufe (6) aufweist und daß Mittel (11) zum Unterkühlen aller aus dieser Kolonne und dem oder den anderen Trenneinrichtungen (5) stammenden Flüssigkeiten auf eine gleiche Temperatur vorgesehen sind.

10. Vorrichtung nach Anspruch 8, dadurch gekennzeichnet, daß eine Destillationskolonne (7; 7A) nach einer Kompressorzwischenstufe (2) vorgesehen ist und daß Mittel (11) zum Unterkühlen der Flüssigkeit der Wanne (L1) dieser Kolonne auf eine erste Temperatur und der Flüssigkeit oder Flüssigkeiten (L2, L3), die aus der oder den folgenden Kompressorstufen (6) stammen, auf eine zweite Temperatur unterhalb dieser ersten Temperatur vorgesehen sind.

11. Vorrichtung nach Anspruch 10, dadurch gekennzeichnet, daß sie außerdem eine Destillationskolonne (7B) nach der oder nach wenigstens einer der folgenden Kompressorstufen (6) aufweist.

12. Vorrichtung nach einem der Ansprüche 8 bis 11 für eine Verflüssigung des zu kühlenden Fluids und zur Lagerung in flüssigem Zustand, dadurch gekennzeichnet, daß sie einen Wärmetauscher (25) aufweist, der in einer Richtung von dem in dem Lagerbehälter (23) erzeugten Dampf und in der anderen Richtung von einer Fraktion des Gemisches mit hohem Druck (G) durchquert wird.

13. Vorrichtung nach einem der Ansprüche 8 bis 12, dadurch gekennzeichnet, daß sie Druckminderer (12, 13, 16; 12A, 13, 16) zum Entspannen aller bis auf einen gleichen Druck komprimierten Fluide aufweist.

14. Vorrichtung nach Anspruch 13, dadurch gekennzeichnet, daß dieser Druck der niedrige Druck ist.

15. Vorrichtung nach einem der Ansprüche 8 bis 14, dadurch gekennzeichnet, daß die oder jede Destillationskolonne (7; 7A, 7B) zwei theoretische Böden aufweist.

16. Vorrichtung nach einem der Ansprüche 8 bis 15, dadurch gekennzeichnet, daß die oder jede Destillationskolonne (7; 7A, 7B) durch direkte Einspritzung von komprimiertem Gas, das aus der entsprechenden Kompressorstufe (2, 6) stammt, in diese Kolonne erwärmt wird.

17. Vorrichtung nach einem der Ansprüche 8 bis 15, dadurch gekennzeichnet, daß die oder jede Destillationskolonne mittels eines Wärmetauschers erwärmt wird, der durch das aus der entsprechenden Kompressorstufe stammende komprimierte Gas gespeist wird.

## Claims

1. Process for cooling a fluid comprising the steps of compressing in at least two steps a frigorific mixture composed of constituents of different volatilities and, after the last step and after at least one intermediate step of compression condensing the mixture partially, releasing the tension of the condensated fractions and vaporizing them in heat exchange with the fluid to be cooled before compressing them again, characterized in that at least one of the operations of condensation is effected by passing the mixture leaving the corresponding compressor step into a distillation column.

2. Process according to claim 1, characterized in that the distillation is effected only after the last compression step and the resultant condensate of this distillation and the other condensate or condensates are undercooled at a same temperature and after releasing the tension reunited in a same conduit before being subjected to heat exchange with the fluid to be cooled.

3. Process according to claim 1, characterized in that a distillation is distillation is effected at an intermediate compression step and the resultant condensate of the distillation is undercooled until a first temperature and the condensate of the following compression step or steps is undercooled at a second temperature below the first one.

4. Process according to claim 3, characterized in that additionally a distillation at the or one of the following compression steps is effected.

5. Process according to one of the claims 1 to 4 wherein the fluid to be cooled is liquified and stored in the liquid state, characterized in that a portion of the mixture at high pressure is condensed in heat exchange with the vapor produced in the storage reservoir.

6. Process according to one of the claims 1 to 5, characterized in that the tension of all of the condensates is released at the same pressure.

7. Process according to claim 6, characterized in that the said pressure is the low pressure.

8. Plant for cooling a fluid comprising a frigorific circuit in which a frigorific mixture circulates and which comprises a compressor having at least two stages (2, 6) each of which being provided with a cooler (4, 8; 4B, 8), and after the cooler (8) of the second stage (6) and after that one (4, 4B) of at least one intermediate stage (2) a liquid-vapor separator (5, 9), characterized in that between the cooler associated with at least one of the separators and the corresponding compressor stage (2, 6) a distillation column (7; 7A, 7B) is mounted which is heated by the gas compressed by this compressor stage and which receives as reflux the liquid issued from the separator.

9. Plant according to claim 8, characterized in that it comprises only one distillation column (7) after the last compressor stage (6) and there are provided means (11) for undercooling at a same temperature all the liquids issued from said column and from the other separator or separators (5).

10. Plant according to claim 8, characterized in that a distillation column (7; 7A) is provided after an intermediate compressor stage (2) and means (11) are provided for undercooling the liquid of the vat (L1) of this column at a first temperature and the liquid or liquids (L2, L3) issued from the following compressor stage or stages (6) at a second temperature below this first temperature.

11. Plant according to claim 10, characterized in that it comprises additionally a distillation column (7B) after the said or at least one of the said following compressor stages (6).

12. Plant according to one of the claims 8 to 11, destinated to liquify the fluid to be cooled and to store it in the liquid state, characterized in that it comprises a heat exchanger (25) passed in one direction by the vapor produced in the storage reservoir (23) and in the other direction by a fraction of the mixture of high pressure (G).

13. Plant according to one of the claims 8 to 12, characterized in that it comprises depressurizers (12, 13, 16; 12A, 13, 16) for releasing the tension of all of the fluids compressed until a same pressure.

14. Plant according to claim 13, characterized in that the said pressure is the low pressure.

15. Plant according to one of the claims 8 to 14, characterized in that the or each distillation column (7; 7A, 8B) comprises two theoretical trays.

16. Plant according to one of the claims 8 to 15, characterized in that the or each distillation column (7; 7A, 7B) is heated by direct injection of compressed gas issued from the corresponding compressor stage (2, 6) into this column.

17. Plant according to one of the claims 8 to 15, characterized in that the or each distillation cloumn is heated by means of a heat exchanger fed by the compressed gas issued from the corresponding compressor stage.

FIG.1

0 117 793

FIG.2

FIG.3

FIG. 4

0 117 793